# EUROPEAN PATENT APPLICATION

(11) **EP 4 117 172 A1**
(43) Date of publication of application: **11.01.2023**
(21) Application number: 22184107.5
(22) Date of filing: 11.07.2022
(51) Int. Cl.: H02P 9/00

(54) **HVDC GENERATOR OUTPUT RECTIFIER ASSEMBLY**

(30) Priority: 09.07.2021 US 202117371430
(71) Applicant: Hamilton Sundstrand Corporation, Charlotte, NC 28217-4578 (US)
(72) Inventor: FENG, Frank Z., Loves Park, 61111-8918 (US); KOENIG, Andreas C., Rockford, 61107 (US); HEGLUND, William S., Rockford, 61114 (US)
(74) Representative: Dehns

(57) **Abstract**

Provided are embodiments for a power generation system. The system includes a generator (202) comprising a first set of stator windings (230A) and a second set of stator windings (230B); a first rectifier (204A) coupled to an output of the first set of stator windings; a second rectifier (204B) coupled to an output of the second set of stator windings; and an electrical connection coupling an output of the first rectifier and an output of the second rectifier, wherein the electrical connection is used to provide a DC supply to a load. Also provided are embodiments for a method for operating the power generation system.

## Description

### BACKGROUND

The present invention relates to generators, and more specifically, to high-voltage direct current (HVDC) generator output rectifier assembly.

Generators convert mechanical energy to electrical energy via the interaction of rotating magnetic fields and coils of wire. A multitude of generator architectures have been developed with various means of providing interaction between magnetic fields and coils of wire. For example, a permanent magnet generator (PMG) utilizes permanent magnets to generate a constant magnetic field, which is rotated via the mechanical energy supplied by a prime mover such that the rotating magnetic field interacts with the stator coils to provide an output voltage. Another type of generator supplies current through a coil to generate the desired magnetic field, which is rotated via the mechanical energy supplied by a prime mover, such that a rotating magnetic field is created that interacts with stator coils to provide an output voltage. The power quality that is supplied to a load must be managed.

### BRIEF DESCRIPTION

According to an embodiment, a power generation system is provided. The system includes a generator comprising a first set of stator windings and a second set of stator windings; a first rectifier coupled to an output of the first set of stator windings; a second rectifier coupled to an output of the second set of stator windings; and an electrical connection coupling an output of the first rectifier and an output of the second rectifier, wherein the electrical connection is used to provide a DC supply to a load.

In addition to one or more of the features described herein, or as an alternative, further embodiments include using a first set of stator windings and a second set of stator windings that are offset by 30 degrees.

In addition to one or more of the features described herein, or as an alternative, further embodiments include using a first set of stator windings to provide a first 3-phase output to the first rectifier and a second set of stator windings to provide a second 3-phase output to the second rectifier.

In addition to one or more of the features described herein, or as an alternative, further embodiments include using a first rectifier and a second rectifier that are each 6-pulse rectifiers.

In addition to one or more of the features described herein, or as an alternative, further embodiments include a generator that has a selected inductance value for each of the first set of stator windings and the second set of stator windings, wherein each of the inductance values are equal.

In addition to one or more of the features described herein, or as an alternative, further embodiments include using a first rectifier that includes a positive output and a negative output, and a second rectifier that includes a positive output and a negative output.

In addition to one or more of the features described herein, or as an alternative, further embodiments include a positive output of the first rectifier and a positive output of the second rectifier that are connected to a positive DC bus.

In addition to one or more of the features described herein, or as an alternative, further embodiments include using a negative output of the first rectifier and a negative output of the second rectifier that are connected to a negative DC bus.

In addition to one or more of the features described herein, or as an alternative, further embodiments include using a first set of stator windings and a second set of stator windings that are symmetrically distributed around a rotor coupled to the generator.

According to an embodiment, a method for operating a high-voltage direct current (HVDC) generator is provided. The method includes converting mechanical power to electrical power using a stator having a first set of stator windings and a second set of stator windings, wherein the first set of stator winding and the second set of stator windings each include inductance values to balance the electrical power of the HVDC generator; rectifying power received from the first set of stator windings and the second set of stator windings; and providing DC power from the first rectifier and the second rectifier to a DC load.

In addition to one or more of the features described herein, or as an alternative, further embodiments include arranging the first set of stator windings and the second set of stator windings are offset by 30 degrees.

In addition to one or more of the features described herein, or as an alternative, further embodiments include arranging the first set of stator windings and the second set of stator windings are offset by 30 degrees.

In addition to one or more of the features described herein, or as an alternative, further embodiments include providing a first 3-phase output of the first set of stator windings to a first rectifier and providing a second 3-phase output of the second set of stator windings to a second rectifier.

In addition to one or more of the features described herein, or as an alternative, further embodiments include operating the first rectifier and the second rectifier, wherein the first rectifier is a 6-pulse rectifier and the second rectifier is a 6-pulse rectifier.

In addition to one or more of the features described herein, or as an alternative, further embodiments include a first rectifier having a positive output and a negative output, and the second rectifier having a positive output and a negative output.

In addition to one or more of the features described herein, or as an alternative, further embodiments include connecting the positive output of the first rectifier and the positive output of the second rectifier to a positive DC bus.

In addition to one or more of the features described herein, or as an alternative, further embodiments include connecting the negative output of the first rectifier and the negative output of the second rectifier to a negative DC bus

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

BRIEF DESCRIPTION OF THE DRAWINGS

The following descriptions should not be considered limiting in any way. With reference to the accompanying drawings, like elements are numbered alike:
FIG. 1 is a schematic block diagram of a power generating system in accordance with the prior art;
FIG. 2 depicts a schematic block diagram of a power generation system having an HVDC generator in accordance with one or more embodiments of the disclosure;
FIG. 3 depicts a flowchart of a method for operating an HVDC generation system in accordance with one or more embodiments of the disclosure; and
FIG. 4 depicts example aircraft that can incorporate the HVDC generation system in accordance with one or more embodiments of the disclosure.

### DETAILED DESCRIPTION

In today's environment, aerospace applications require high-quality power from the power source to ensure the reliability of its systems. In order to generate a high-quality power signal, two bridges are each operated as 6-pulse rectifiers. An interphase transformer (IPT) can be used to sum the outputs of the first bridge and the second bridge. When operated in this manner, the output of the IPT produces a 12-pulse output for use by various applications.

An IPT is needed to balance the power between the two bridges of the generator that are operated in parallel to each other. The IPT allows power sharing between the parallel systems.

The IPT produces weight and efficiency drawbacks for the HVDC generator. Power generating systems having two 3-phase converters in parallel on the DC side require the IPT to balance the power distribution between the converters. The IPT absorbs the difference of the instantaneous voltages of the two converters. The total load current is shared by the two converters and hence is the sum of the individual converter currents.

The techniques described herein eliminate the requirement for the IPT while maintaining the power quality for high-power applications.

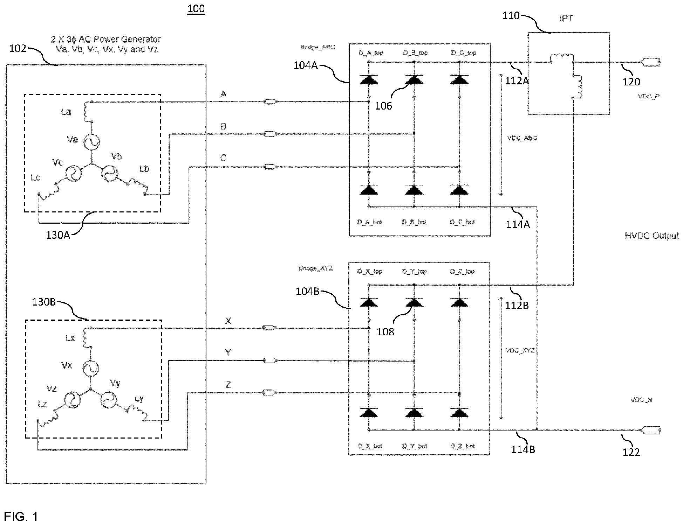

FIG. 1 depicts a schematic block diagram of a generator in accordance with the prior art. As shown in FIG. 1, the power generating system 100 includes the IPT 110 that is used to balance the output of the generator 102. The generator 102 can include two sets of 3-phase stator winding. The first set of 3-phase stator windings can include stator windings (A, B, C) and the second set of 3-phase stator windings can include the stator windings (X, Y, Z). The output of first set and second set of 3-phase stator windings are fed to a first rectifier 104A and a second rectifier 104B. The first rectifier 104A and the second rectifier 104B can include circuit components 106, 108 to convert the AC power signal to a DC power signal for a load (not shown). The first rectifier 104A provides DC outputs 112A, 114A, and the second rectifier 104B provides DC outputs 112B, 114B.

To achieve power sharing between the first rectifier 104A and the second rectifier 104B the IPT 110 is required to balance the voltages in this architecture for proper operation. The positive output 112A of the first rectifier 104A and the positive output 112B of the second rectifier 104B are provided to the IPT 110. An output of the IPT 110 is provided to the positive DC bus 120 to provide the power load. The negative output 114A of the first rectifier 104A and the negative output 114B of the second rectifier 104B are coupled to the negative DC bus 122 to provide power to the load. As shown in FIG. 1, there is no direct connection between the first rectifier 104A to the load, but instead is connected to the load through the IPT 110.

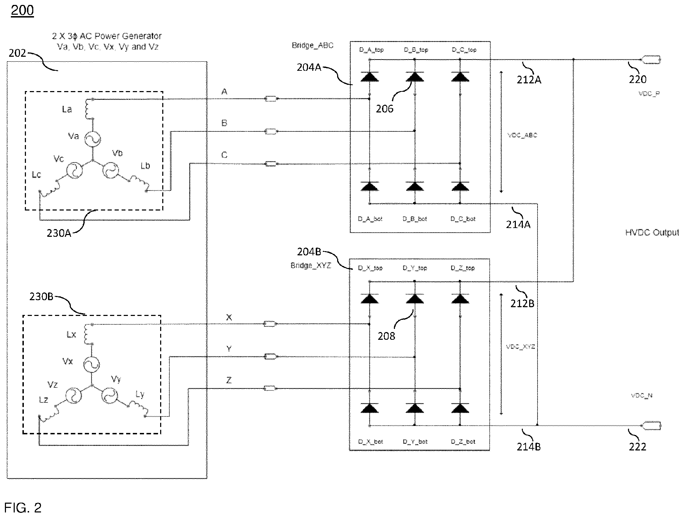

Now referring to FIG. 2, a schematic block diagram of an HVDC power generation system 200 in accordance with one or more embodiments of the disclosure is shown. The HVDC power generation system 200 does not include an IPT (such as the IPT 110) to balance the power between the first rectifier 204A and second rectifier 204B shown in FIG. 2. The HVDC power generation system 200 includes a generator 202. The HVDC generator 202 includes two sets of 3-phase stator windings. The first set of 3-phase windings 230A and a second set of 3-phase windings 230B provide a first 3-phase output (A, B, C) and a second 3-phase output (X, Y, Z), respectively. The first set of stator windings and the second set of stator windings can be magnetically coupled to the rotor driven by a shaft of the HVDC generator 200. In one or more embodiments of the disclosure, the first set of stator windings 230A and the second set of stator windings 230B are offset by 30 degrees. The offset as used herein refers to the offset in electrical degrees relative to the fundamental frequency of the output voltage and not necessarily to the offset in mechanical degrees of the stator. The 30-degree offset enables the reduction in the ripple current and voltage that may be introduced by the HVDC generator 200.

FIG. 2 shows inductors (La, Lb, Lc; Lx, Ly, Lz) corresponding to the first set of stator windings 230A and the second set of stator windings 230B. The generator inductance of the windings (stator windings) are selected and used as a substitute for IPT (shown in FIG. 1) where the IPT is no longer required to balance the power between the first rectifier 204A and second rectifier 204B. In one or more embodiments of the disclosure the inductance values are equal, and therefore, the power that is output the first and second set of stator windings are balanced prior to being rectified by the first and second rectifier 204A, 204B, respectively. Although the inductors are physically shown, they are representative of the generator inductance of the stator windings that are internal to the generator 202. In one or more embodiments of the disclosure, the inductors model the inductances which are integrated into the stator windings of the generators.

By selecting the inductance values in the stator windings of the generators 202 and ensuring the inductance values of the stator windings are equal, the most compact architecture can be provided for the power generation. The lower the generator inductance and/or impedance the size of the machine must be increased. Therefore, an IPT-free architecture such as that shown in FIG. 2 can be used. In order to keep the generator size small, the generator may have a high inductance. The size of the generator can increase as the inductance decreases.

The first rectifier 204A provides DC outputs 212A, 214A, and the second rectifier 204B provides DC outputs 212B, 214B. The first rectifier 204A includes a configuration of diodes 206 to rectify the AC input into a DC output, and the second rectifier 204B includes a configuration of diodes 208 to rectifier the AC input into a DC output. In one or more embodiments of the disclosure, the diodes 206, 208 operate on a 120-degree conduction angle. The positive output 212A of the first rectifier 204A and the positive output 212B of the second rectifier 204B are provided directly to the positive DC bus 220. The negative output 214A of the first rectifier 204A and the negative output 214B of the second rectifier 204B are provided directly to the negative DC bus 222 to provide power to the load. Because of the selected inductance for each of the six windings in the voltage source 202, the output can be provided directly to the load without the use of an IPT, and the output power of the HVDC generator 200 can be used to drive a DC load. The generator stator voltages that are output are identical due to sharing the excitation of the same rotor.

One or more illustrative embodiments of the disclosure are described herein. Such embodiments are merely illustrative of the scope of this disclosure and are not intended to be limiting in any way. Accordingly, variations, modifications, and equivalents of embodiments disclosed herein are also within the scope of this disclosure

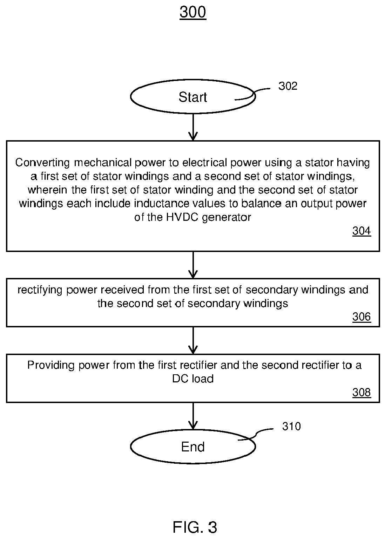

FIG. 3 depicts a flowchart of a method 300 for operating an HVDC generator in accordance with one or more embodiments of the disclosure. In one or more embodiments of the disclosure, the method 300 can be performed using the generator 200 shown in FIG. 2 The method 300 begins at block 302 and proceeds to block 304 provides for converting mechanical power to electrical power using a stator having a first set of stator windings and a second set of stator windings, wherein the first set of stator winding and the second set of stator windings each include inductance values to balance the electrical power of the HVDC generator. Block 306 rectifies power received from the first set of stator windings and the second set of stator windings. Block 308 provides output power from the first rectifier and the second rectifier to a DC load. The method 300 ends at block 310.

One or more illustrative embodiments of the disclosure are described herein. Such embodiments are merely illustrative of the scope of this disclosure and are not intended to be limiting in any way. Accordingly, variations, modifications, and equivalents of embodiments disclosed herein are also within the scope of this disclosure.

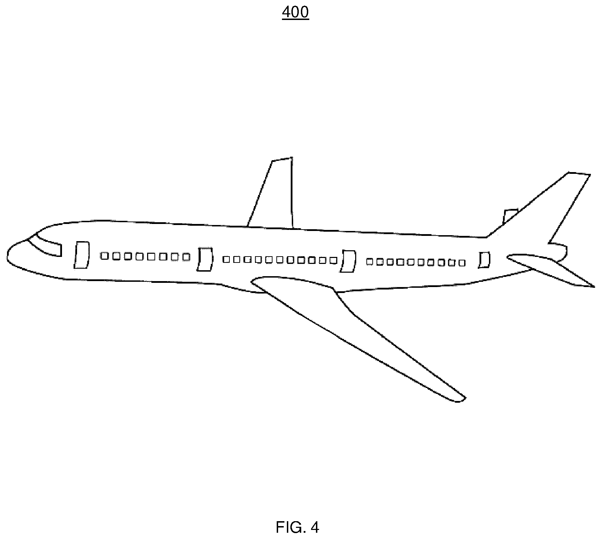

FIG. 4 depicts example aircraft 400 that can incorporate the HVDC generator in accordance with one or more embodiments of the disclosure.

The technical effects and benefits described herein provide power density improvement and simple top-level assembling for power generation. In addition, the technical effects and benefits include eliminating the IPT and achieves the weight and efficiency advantage while maintaining the 12-pulse output DC power quality. Also, by eliminating the IPT fewer components exist that may fail or require maintenance during the life of the generator. IPT failures will not be a concern in the power generation architecture described herein.

A detailed description of one or more embodiments of the disclosed apparatus and method are presented herein by way of exemplification and not limitation with reference to the Figures.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the invention as defined by the claims. In addition, many modifications may be made to adapt a particular situation or material to the teachings of the present disclosure without departing from the scope of the claims. Therefore, it is intended that the present disclosure not be limited to the particular embodiment disclosed as the best mode contemplated for carrying out this present disclosure, but that the present disclosure will include all embodiments falling within the scope of the claims.

## Claims

1. A power generation system comprising:
a generator (202) comprising a first set of stator windings (230A) and a second set of stator windings;
a first rectifier (204A) coupled to an output of the first set of stator windings;
a second rectifier (204B) coupled to an output of the second set of stator windings; and
an electrical connection coupling an output of the first rectifier and an output of the second rectifier, wherein the electrical connection is used to provide a DC supply to a load.

2. The system of claim 1, wherein the first set of stator windings and the second set of stator windings are offset by 30 degrees.

3. The system of claim 1 or 2, wherein the first set of stator windings provide a first 3-phase output to the first rectifier and the second set of stator windings provide a second 3-phase output to the second rectifier.

4. The system of claim 1, 2 or 3, wherein the first rectifier and the second rectifier are each 6-pulse rectifiers.

5. The system of any proceedings claim, wherein the generator comprises a selected inductance value for each of the first set of stator windings and the second set of stator windings, wherein each of the inductance values are equal.

6. The system of any proceeding claim, wherein the first rectifier comprises a positive output and a negative output, and the second rectifier comprises a positive output and a negative output.

7. The system of claim 6, wherein the positive output of the first rectifier and the positive output of the second rectifier are connected to a positive DC bus.

8. The system of claim 7, wherein the negative output of the first rectifier and the negative output of the second rectifier are connected to a negative DC bus.

9. The system of any proceeding claim, wherein the first set of stator windings and the second set of stator windings are symmetrically distributed around a rotor coupled to the generator.

10. A method for operating a high-voltage direct current, HVDC, generator, the method comprising:
converting mechanical power to electrical power using a stator having a first set of stator windings and a second set of stator windings, wherein the first set of stator winding and the second set of stator windings each include inductance values to balance the electrical power of the HVDC generator;
rectifying power received from the first set of stator windings and the second set of stator windings; and
providing DC power from the first rectifier and the second rectifier to a DC load.

11. The method of claim 10, further comprising arranging the first set of stator windings and the second set of stator windings are offset by 30 degrees.

12. The method of claim 10 or 11, further comprising providing a first 3-phase output of the first set of stator windings to a first rectifier and providing a second 3-phase output of the second set of stator windings to a second rectifier.

13. The method of claim 10, 11 or 12, further comprising operating the first rectifier and the second rectifier, wherein the first rectifier is a 6-pulse rectifier and the second rectifier is a 6-pulse rectifier.

14. The method of claim 12, wherein the first rectifier comprises a positive output and a negative output, and the second rectifier comprises a positive output and a negative output.

15. The method of claim 14, further comprising connecting the positive output of the first rectifier and the positive output of the second rectifier to a positive DC bus, and optionally further comprising connecting the negative output of the first rectifier and the negative output of the second rectifier to a negative DC bus.
